# EUROPEAN PATENT APPLICATION

(11) **EP 4 317 056 A1**
(43) Date of publication of application: **07.02.2024**
(21) Application number: 22780789.8
(22) Date of filing: 28.03.2022
(51) Int. Cl.: C01B 13/02, C25B 11/054, C25B 11/081, C25B 9/00, C25B 15/00, C25B 15/023, C25B 15/08, C25B 1/04

(54) **METHOD FOR PRODUCING HYDROGEN GAS, METHOD FOR STOPPING OPERATION OF APPARATUS FOR PRODUCING HYDROGEN GAS, AND HYDROGEN GAS PRODUCTION APPARATUS**

(30) Priority: 30.03.2021 JP 2021057156
(71) Applicant: Mitsui Mining & Smelting Co., Ltd., Shinagawa-ku Tokyo 141-8584 (JP)
(72) Inventor: TANIGUCHI, Koji, Hida-shi, Gifu 506-1196 (JP); WATANABE, Hiromu, Ageo-shi, Saitama 362-0021 (JP); KITABATAKE, Takuya, Ageo-shi, Saitama 362-0021 (JP); NAKAHARA, Yunosuke, Ageo-shi, Saitama 362-0021 (JP)
(74) Representative: Novagraaf Technologies
(86) International application number: PCT/JP2022/015119
(87) International publication number: WO 2022/210578

(57) **Abstract**

The present invention provides a production method for producing a hydrogen gas through electrolysis of water. The production method includes: decreasing a current density to a range that is greater than 0 A/cm² and less than a value used in the electrolysis and in which the electrolysis does not stop; holding the current density for 1 second or more while introducing a gas to at least a hydrogen generating electrode; and decreasing the current density to a value at which the electrolysis does not take place so as to stop the electrolysis. It is preferable that the gas is a gas that is electrochemically inert to a fuel cell reaction. It is also preferable that the gas is at least one selected from the group consisting of nitrogen and a noble gas.

## Description

### Technical Field

The present invention relates to a production method for producing a hydrogen gas, and a shutdown method for shutting down a hydrogen gas production apparatus. The present invention also relates to a hydrogen gas production apparatus.

### Background Art

With environmental issues increasingly gaining attention, recent years have seen an increase in the expectations for the use of hydrogen as an energy source. Hydrogen generated from water electrolysis using renewable energy is a clean energy source that does not emit carbon dioxide. Accordingly, systems for producing hydrogen such as an electrochemical apparatus are actively being developed.

Conventional water electrolysis systems have a problem in that the electrode catalyst deteriorates due to reverse current generated when the apparatus is shut down (see Patent Literature 1). The cause of reverse current generation is considered to mainly include two factors: a sharp voltage drop that occurs when the apparatus is shut down; and the progression of a reverse reaction of the electrode reaction in normal water electrolysis.

### Citation List

### Patent Literature

Patent Literature 1: WO 2020/203857

### Summary of Invention

The technique disclosed in Patent Literature 1 was realized based on the fact that the reverse current is generated, and, for the purpose of suppressing the reverse current, a relay for switching a reverse current flow path between on and off is provided in the apparatus. However, the control performed by the relay is mechanical control. Accordingly, there is a problem regarding long-term reliability of the apparatus. Also, short circuiting of contacts may occur when high electric currents flow therethrough, which is also problematic in terms of long-term reliability of the apparatus.

Accordingly, it is an object of the present invention to provide a production method for producing hydrogen gas, a shutdown method for shutting down a hydrogen gas production apparatus, and a hydrogen gas production apparatus, with which it is possible to suppress the reverse current generated when the apparatus is shut down.

The present invention provides a method for producing a hydrogen gas through electrolysis of water, the production method including:
decreasing a current density to a range that is greater than 0 A/cm² and less than a value of the current density used in the electrolysis and in which the electrolysis does not stop, prior to the electrolysis being stopped;
holding the current density for 1 second or more while introducing a gas to at least a hydrogen generating electrode; and
decreasing the current density to a value at which the electrolysis does not take place so as to stop the electrolysis.

Also, the present invention provides a method for shutting down a hydrogen gas production apparatus that produces a hydrogen gas through electrolysis of water, the method including: decreasing a current density to a range that is greater than 0 A/cm² and less than a value of the current density used in the electrolysis and in which the electrolysis does not stop, prior to the electrolysis being stopped; holding the current density for 1 second or more while introducing a gas to at least a hydrogen generating electrode; and decreasing the current density to a value at which the electrolysis does not take place so as to stop the electrolysis.

Furthermore, the present invention provides a apparatus for producing a hydrogen gas, including: a storage unit in which a procedure of the shutdown method described above is stored; and a controller that stops electrolysis of water based on the procedure stored in the storage unit.

### Brief Description of Drawings

[Fig. 1] Fig. 1 is a schematic diagram of a hydrogen gas production apparatus preferably used in a production method for producing a hydrogen gas according to the present invention.
[Fig. 2] Figs. 2(a) and 2(b) are graphs showing current density control methods used in the production method for producing a hydrogen gas according to the present invention.
[Fig. 3] Fig. 3 is a graph showing variations over time in the voltage of water electrolysis cells during hydrogen gas production performed in Examples and Comparative Examples.

### Description of Embodiments

Hereinafter, the present invention will be described based on a preferred embodiment thereof with reference to the drawings.

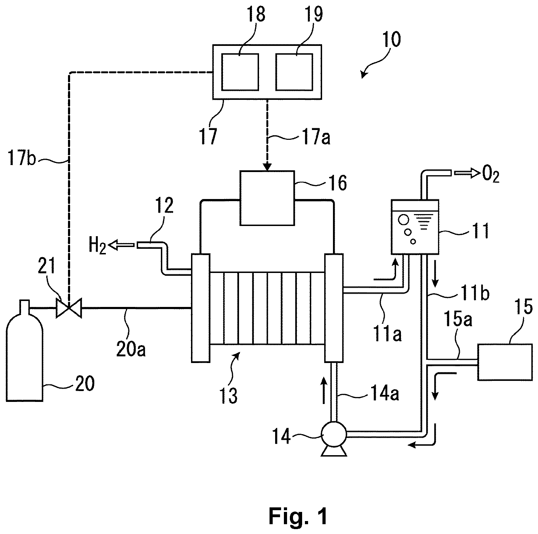

Fig. 1 schematically shows a hydrogen gas production apparatus preferably used in a production method for producing a hydrogen gas according to the present invention. The water electrolysis apparatus of the present embodiment is used to produce a hydrogen gas by electrolyzing water to generate a hydrogen gas in the cathode and an oxygen gas in the anode.

A hydrogen gas production apparatus 10 shown in Fig. 1 includes a liquid-gas separation tank 11. The hydrogen gas production apparatus 10 also includes a water electrolysis stack 13. The liquid-gas separation tank 11 and the water electrolysis stack 13 are connected to each other via a pipeline 11a so that an electrolyte solution can flow therebetween.

The hydrogen gas production apparatus 10 includes a liquid feeding pump 14. The liquid feeding pump 14 is connected to the water electrolysis stack 13 via a pipeline 14a. With this configuration, an electrolyte solution can be supplied from the liquid feeding pump 14 to the water electrolysis stack 13.

The liquid feeding pump 14 is also connected to the liquid-gas separation tank 11 via a feedback pipeline 11b. With this configuration, an electrolyte solution can flow from the liquid-gas separation tank 11 to the liquid feeding pump 14.

Furthermore, the liquid feeding pump 14 is connected to a water supply tank 15 via an electrolyte solution supply pipeline 15a. The water supply tank 15 is used to supply the electrolyte solution consumed during electrolysis.

The hydrogen gas production apparatus 10 includes a power supply unit 16. The power supply unit 16 is used to supply electric power to the water electrolysis stack 13.

The supply of electric power to the water electrolysis stack 13 by the power supply unit 16 is controlled by a control unit 17. The control unit 17 includes: a storage unit 18 in which a procedure for operating the hydrogen gas production apparatus 10 and shutting down the hydrogen gas production apparatus 10 is stored; and a controller 19 that stops the electrolysis of water based on the procedure stored in the storage unit 18. The control unit 17 is connected to the power supply unit 16 via a signal line 17a. Instructions issued from the control unit 17 are transmitted to the power supply unit 16 via the signal line 17a.

The hydrogen gas production apparatus 10 includes a purging gas supply source 20. The purging gas supply source 20 is connected to the water electrolysis stack 13 via a gas pipeline 20a. An open/close valve 21 is provided on the gas pipeline 20a. The supply of a purging gas from the purging gas supply source 20 to the water electrolysis stack 13 is controlled by opening and closing of the open/close valve 21. The open/close valve 21 is opened and closed by the control unit 17 via a signal line 17b that electrically connects the open/close valve 21 and the control unit 17. Instructions issued from the control unit 17 are transmitted to the open/close valve 21 via the signal line 17b, and the open/close valve 21 is opened or closed based on the instructions.

The water electrolysis stack 13 included in the hydrogen gas production apparatus 10 may include a plurality of water electrolysis cells (not shown). The water electrolysis cells can be connected in series.

Each of the water electrolysis cells may include a hydrogen generating electrode, an oxygen generating electrode, and a separation membrane for separating the hydrogen generating electrode and the oxygen generating electrode from each other.

As the separation membrane, an appropriate material is used according to the specific form of water electrolysis. In the case where, for example, PEM (Polymer Electrolyte Membrane) water electrolysis is performed as the water electrolysis, for example, a proton conductive electrolyte membrane can be used as the separation membrane. As the proton conductive electrolyte membrane, for example, an electrolyte membrane made of a solid polymer containing a fluorine polymer having a sulfonic acid group, an electrolyte membrane made of a solid polymer containing an aromatic hydrocarbon, or the like may be used. On the other hand, in the case where alkaline water electrolysis is performed as the water electrolysis, a woven fabric that is made of a composite material of a resin such as polysulfone, polyphenylene sulfide, polyphenylene ether ether ketone (PEEK) or PTFE and inorganic hydrophilic particles such as ZrO₂ particles and allows an electrolyte solution to permeate therethrough, or the like can be used as the separation membrane.

As the hydrogen generating electrode and the oxygen generating electrode, an appropriate material can be selected and used according to the type of water electrolysis. In the case where PEM water electrolysis is performed, it is preferable to use, as each electrode, an electrode catalyst layer formed by applying a paste containing a catalyst support composed of a catalyst that is supported on the surfaces of electroconductive support particles to each surface of a solid polymer electrolyte membrane. An ionomer may also be contained in the electrode catalyst layer for the purpose of enhancing the proton conductivity and the adhesion of the catalyst support to the solid polymer electrolyte membrane. A structure in which an electrode catalyst layer is formed on each surface of a solid polymer electrolyte membrane is often called a CCM (Catalyst Coated Membrane). A bipolar plate that functions as a current collector may also be provided on each surface of the CCM. Furthermore, gas diffusion layers may also be provided between the surfaces of the CCM and the bipolar plates.

On the other hand, in the case where alkaline water electrolysis is performed as the water electrolysis, the hydrogen generating electrode and the oxygen generating electrode are preferably porous for the purpose of increasing the surface area used during electrolysis and efficiently removing a hydrogen gas and an oxygen gas generated during electrolysis from the electrode surface. For this purpose, the hydrogen generating electrode and the oxygen generating electrode may be made using various types of porous materials such as a plain weave mesh, a punched metal sheet, an expanded metal sheet, and a metal foam.

As elements that can be used as the material of the oxygen generating electrode in the case where PEM water electrolysis is performed, niobium, tantalum, titanium, zirconium, tungsten, tin, nickel, cobalt, iron, a platinum group element, and the like can be used. As elements that can be used in the hydrogen generating electrode, in addition to the elements used in the oxygen generating electrode, for example, molybdenum can be used. In order to achieve the desired catalytic activity and durability, these elements can be used in the form of an elemental metal, or in the form of a compound such as an oxide, a composite oxide or an alloy containing a plurality of metal elements, or a mixture thereof.

As the elements that can be used as the material of the hydrogen generating electrode and the oxygen generating electrode in the case where alkaline water electrolysis is performed, in addition to the elements that can be used in the case where PEM water electrolysis is performed, silver, vanadium, chromium, manganese, yttrium, and the like can be used. These elements can be used in the form of an elemental metal, or in the form of a compound such as an oxide, a composite oxide, an alloy, or a mixture, as in the case of PEM water electrolysis.

Irrespective of whether PEM water electrolysis or alkaline water electrolysis is performed, from the viewpoint of smooth water electrolysis, in particular, the elements used in the oxygen generating electrode preferably include a platinum group element, and more preferably include iridium. In the case where iridium is used, it is preferable to use iridium in the form of an alloy or a mixture containing a plurality of metal elements, or an oxide thereof, from the viewpoint of catalytic activity and the durability of the catalyst.

In addition to the elements listed above, a hafnium oxide, a zirconium oxide, a fluorine-containing tin oxide, an antimony-containing tin oxide, an indium-containing tin oxide, carbon, and the like can be used as the material. As the carbon, for example, a group of carbonaceous materials called carbon black can be used. As the material used in the oxygen generating electrode, a fluorine-containing tin oxide and the like can be used.

As the material used in the hydrogen generating electrode and the oxygen generating electrode in the case where alkaline water electrolysis is performed, a lanthanide oxide, a transition metal oxide, a composite oxide, and the like can be used.

In each water electrolysis cell, the oxygen generating electrode is configured such that an electrolyte solution flows therethrough. The electrolyte solution is caused to flow through the oxygen generating electrode by the liquid feeding pump 14 described above.

The liquid-gas separation tank 11 included in the hydrogen gas production apparatus 10 is connected to an electrolysis chamber (not shown) that is provided on the oxygen generating electrode side in the water electrolysis stack 13. The liquid-gas separation tank 11 connected to the electrolysis chamber provided on the oxygen generating electrode side is used to separate the oxygen gas generated by the oxygen generating electrode from the electrolyte solution.

When the water electrolysis stack 13 is energized to operate the hydrogen gas production apparatus 10, an oxygen gas is generated by the oxygen generating electrode, and the generated oxygen gas flows into the liquid-gas separation tank 11 together with the electrolyte solution. In the liquid-gas separation tank 11, the oxygen gas moves to a gas phase in the upper part of the tank, and the electrolyte solution remains in a liquid phase in the lower part of the tank. The oxygen gas that has moved to the upper part of the tank is recovered by a gas recovery unit (not shown).

On the other hand, a hydrogen gas is generated by the hydrogen generating electrode, and the generated hydrogen gas flows to a gas recovery unit (not shown) provided outside the apparatus, via a gas recovery pipeline 12, and is recovered by the gas recovery unit.

As the water supply tank 15 included in the hydrogen gas production apparatus 10, water supply tanks that are the same as those known in the pertinent technical field can be used without any particular limitation. As the water to be supplied, it is easy to use municipal water. However, considering the stability of long-term operation, it is preferable to use ion exchange water, reverse osmosis water, ultrapure water, or the like.

A production method for producing a hydrogen gas through electrolysis of water using the hydrogen gas production apparatus 10 configured as described above will be described.

The production method for producing a hydrogen gas of the present invention is roughly divided into an energization electrolysis step, a pre-de-energization step, and a de-energization step. Hereinafter, these steps will be described one by one.

### Energization Electrolysis Step

In the energization electrolysis step, the liquid feeding pump is activated to cause an electrolyte solution to flow and circulate through the constituent units of the hydrogen gas production apparatus 10. When the electrolyte solution is flowing and circulating in a stable manner, an instruction is transmitted from the control unit 17 to the power supply unit 16 to supply electric power to the water electrolysis stack 13 to start energization. In this case, a voltage is applied across the oxygen generating electrode and the hydrogen generating electrode such that the oxygen generating electrode has a relatively positive potential, and the hydrogen generating electrode has a relatively negative potential. As a result, an oxidation reaction takes place in the oxygen generating electrode to generate an oxygen gas, and a reduction reaction takes place in the hydrogen generating electrode to generate a hydrogen gas.

There is no particular limitation on the type of electrolyte solution used. For example, water that has a pH in a neutral range such as municipal water, ion exchange water, reverse osmosis water, or ultrapure water can be used. Alternatively, it is also possible to use, as the electrolyte solution, an aqueous solution in which a water-soluble alkaline salt is dissolved and that has a pH in an alkaline range. It is also possible to use, for example, an aqueous solution of sodium hydroxide, an aqueous solution of potassium hydroxide, or the like. The concentration of the water-soluble alkaline salt in the aqueous solution that has a pH in an alkaline range can be set to, for example, 20 mass% or more and 50 mass% or less, and more particularly, 25 mass% or more and 40 mass% or less.

The energization electrolysis step can also be performed at room temperature (15°C to 25°C) in the absence of heat. Alternatively, in the case where water is used as the electrolyte solution, the electrolyte solution may also be heated because corrosion is unlikely to be problematic. In the case where the energization electrolysis step is performed in the presence of heat, the electrolyte solution can be heated to, for example, about 150°C.

From the viewpoint of the stability of water electrolysis and efficient generation of hydrogen gas, it is preferable that the energization electrolysis step is generally performed at a current density I_{A} of more than 0.1 A/cm² and 10 A/cm² or less. From this viewpoint, the current density I_{A} during water electrolysis is more preferably greater than 0.5 A/cm² and 7 A/cm² or less, and even more preferably greater than 1 A/cm² and 4 A/cm² or less. The current density I_{A} in the energization electrolysis step may be kept constant within the above-described range, or may be varied within the above described range. For example, the current density I_{A} may be increased or decreased, or gradually increased or decreased. Here, the term "current density" used in the present invention refers to the density of electric current flowing between the oxygen generating electrode and the hydrogen generating electrode, or in other words, between electrodes.

### Pre-De-Energization Step

When the hydrogen gas production apparatus 10 in an operation state is transitioned to enter a shutdown state, the apparatus 10 is subjected to the pre-de-energization step during the transition. A feature of the production method for producing a hydrogen gas of the present invention is the pre-de-energization step, or in other words, the method for shutting down the operation of the hydrogen gas production apparatus 10. By performing the pre-de-energization step in the production of a hydrogen gas using the hydrogen gas production apparatus 10, the reverse current resulting from a sharp voltage drop caused when the operation is shut down can be effectively suppressed, and the deterioration of the electrode catalyst is effectively suppressed.

In the pre-de-energization step, prior to the water electrolysis performed in the energization electrolysis step being stopped, the current density is reduced to a current density I_{B} that is less than the current density I_{A} in the energization electrolysis step. Of course, the current density I_{B} should not be decreased to a value at which water electrolysis does not take place. That is, in the pre-de-energization step, electrolysis of water is performed, although to a lesser extent, by causing electric current to flow within a range in which the electrolysis does not stop. Whether or not the electrolysis has been stopped can be determined based on the current density value. Specifically, when the current density takes a value greater than 0 A/cm², it can be determined that electrolysis is taking place.

The current density I_{B} in the pre-de-energization step is set to a value less than the current density I_{A} in the energization electrolysis step. Accordingly, when the current density I_{A} in the energization electrolysis step is varied, the current density I_{B} in the pre-de-energization step is set to a value lower than the lowest value of the current density I_{A} in the energization electrolysis step.

As a result of studies conducted by the inventors of the present application, it was found that, from the viewpoint of effectively suppressing the reverse current generated when the water electrolysis operation is stopped, irrespective of the size of the water electrolysis stack 13 and the electrode area, it is advantageous to set the current density I_{B} in the pre-de-energization step to 1 A/cm² or less as long as the current density I_{B} in the pre-de-energization step is lower than the current density I_{A} in the energization electrolysis step. That is, the current density I_{B} in the pre-de-energization step is set preferably to be greater than 0 A/cm² and 1 A/cm² or less, as long as the current density I_{B} is set to a value that is lower than the current density I_{A} and at which water electrolysis takes place. In particular, from the viewpoint of further suppressing the reverse current, the current density I_{B} is set more preferably to 0.005 A/cm² or more and 0.5 A/cm² or less, and even more preferably to 0.008 A/cm² or more and 0.1 A/cm² or less.

In relation to the current density I_{A} in the energization electrolysis step, it is advantageous to set the current density I_{B} in the pre-de-energization step such that I_{B}/I_{A} takes a value of preferably 0.0005 or more and 0.5 or less, from the viewpoint of effectively suppressing the reverse current generated when the water electrolysis operation is stopped. From the viewpoint of exhibiting this advantage more remarkably, the value of I_{B}/I_{A} is set more preferably to 0.001 or more and 0.3 or less, and even more preferably to 0.001 or more and 0.15 or less.

While the pre-de-energization step is being underway, the current density I_{B} may be kept constant within the above-described range, or may be varied within the above described range. For example, the current density I_{B} may be increased or decreased, or gradually decreased. In either case, the current density I_{B} while the pre-de-energization step is being underway should not be changed to a value greater than or equal to the current density I_{A} in the energization electrolysis step. From the viewpoint of effectively suppressing the reverse current generated when the water electrolysis operation is stopped, the current density I_{B} while the pre-de-energization step is being underway is preferably kept as constant as possible.

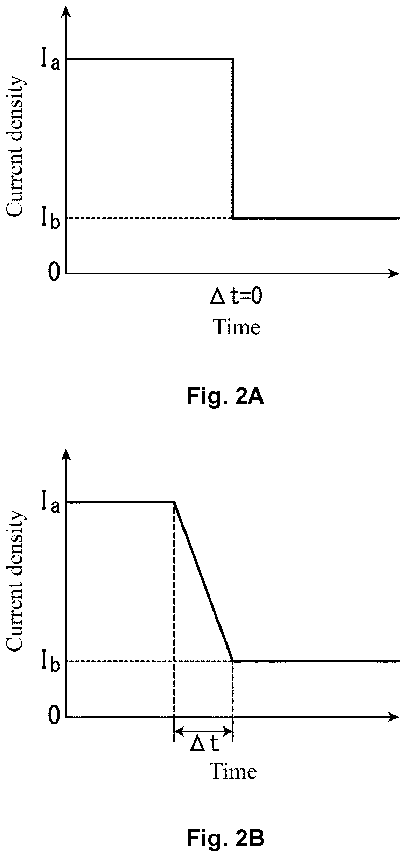

When decreasing the current density in the pre-de-energization step, as shown in Fig. 2(a), the current density can be decreased stepwise from I_{A} to I_{B}. That is, transition time Δt required for the current density to decrease from I_{A} to I_{B} can be set to zero (or as close to as zero as possible).

Alternatively, as shown in Fig. 2(b), the current density may be gradually decreased from I_{A} to I_{B}. In the case of the latter, the transition time Δt required for the current density to decrease from I_{A} to I_{B} is preferably 1 second or more and 300 seconds or less from the viewpoint of being able to suppress the reverse current generated by the potential variation between electrodes. From this viewpoint, the transition time Δt is set more preferably to 120 seconds or less, and even more preferably 60 seconds or less.

In the case where the method for decreasing the current density shown in Fig. 2(a) and the method for decreasing the current density shown in Fig. 2(b) are compared, it is preferable to use the former method from the viewpoint of more effectively suppressing the reverse current generated when the water electrolysis operation is stopped.

In the pre-de-energization step, it is preferable to hold the current density I_{B} for a predetermined period of time, for example, for 1 second or more, from the viewpoint of more effectively suppressing the reverse current generated when the water electrolysis operation is stopped. From the viewpoint of exhibiting this advantage more remarkably, the current density I_{B} is held more preferably for 30 seconds or more, even more preferably for 40 seconds or more, and even much more preferably for 50 seconds or more.

There is no particular limitation on the upper limit of the holding time for which the current density I_{B} in the pre-de-energization step is held. However, from the viewpoint of balancing suppression of the reverse current and effective production of a hydrogen gas, the holding time is preferably 30,000 seconds or less, more preferably 12,000 seconds or less, even more preferably 1000 seconds or less, and even much more preferably 100 seconds or less.

In the pre-de-energization step, it is preferable that the potentials of the oxygen generating electrode and the hydrogen generating electrode are controlled by the controller 19 until the electrolysis of water is stopped so as to maintain a state in which the oxygen generating electrode always or regularly has a potential that is higher than that of the hydrogen generating electrode and is greater than or equal to the overvoltage generated in the water electrolysis reaction. With this configuration, the occurrence of a fuel cell reaction is suppressed, and the generation of the reverse current is effectively suppressed. From this viewpoint, potential difference ΔV between the oxygen generating electrode and the hydrogen generating electrode is preferably 0.1 mV or more, more preferably 0.3 mV or more, and even more preferably 0.5 mV or more, as long as the potential difference ΔV is greater than or equal to the overvoltage generated in the water electrolysis reaction. Although it is often the case that the value of the overvoltage depends on the apparatus configuration, as an example, in the present embodiment, the potential difference is preferably 1500 mV or more. From the viewpoint of preventing deterioration of the electrode catalyst and the electrolyte membrane, the upper limit of the potential difference is preferably controlled such that the upper limit of the potential difference does not excessively exceed the overvoltage generated in the water electrolysis reaction. As an example, in the present embodiment, the potential difference is preferably 2500 mV or less, and more preferably 2000 mV or less.

In the pre-de-energization step, it is preferable to introduce a purging gas into at least the hydrogen generating electrode at the same time as when the operation of decreasing the current density is performed. By introducing a purging gas, the hydrogen gas remaining in the hydrogen generating electrode can be forcibly discharged to the outside of the system. That is, the hydrogen gas that causes a fuel cell reaction that is the reverse reaction of the water electrolysis can be removed from the inside of the system, and the reverse current generated when the water electrolysis operation is stopped can be effectively suppressed. From this viewpoint, it is advantageous to spray a purging gas toward the hydrogen generating electrode from the viewpoint of forcibly discharging the hydrogen gas remaining in the hydrogen generating electrode.

The purging gas is used for the purpose of suppressing the reverse current, or in other words, for the purpose of suppressing the occurrence of a fuel cell reaction. For this purpose, the purging gas is preferably electrochemically inert to the fuel cell reaction. From this viewpoint, it is preferable to use, as the purging gas, at least one selected from the group consisting of nitrogen and a noble gas. It is also possible to use a mixed gas composed of gases selected from the above-described group. The noble gas that can be used includes, argon, helium, neon, and the like.

The introduction of the purging gas into the hydrogen generating electrode may be performed at the same time as when the current density is decreased to I_{B} or after the current density has decreased to I_{B}. The reverse current is generated when the operation of water electrolysis is stopped. Accordingly, the generation of the reverse current is suppressed by introducing the purging gas at any timing while the pre-de-energization step is being underway. Of course, from the viewpoint of more effectively suppressing the generation of the reverse current, it is preferable to introduce the purging gas at the same time as when the current density is decreased to I_{B}.

The introduction of the purging gas into the hydrogen generating electrode may be performed continuously or intermittently, as long as the hydrogen gas remaining in the hydrogen generating electrode can be forcibly discharged.

In the case where the purging gas is continuously introduced, the amount of purging gas introduced into the hydrogen generating electrode may be constant or varied over time.

In the case where the purging gas is intermittently introduced, the frequency at which the purging gas is introduced may or may not be constant.

There is no particular limitation on the amount of purging gas introduced into the hydrogen generating electrode, as long as the hydrogen gas remaining in the hydrogen generating electrode can be forcibly discharged. As a result of studies conducted by the inventors of the present application, it was found that satisfactory results can be obtained by introducing the purging gas such that L/S, which is the ratio of the amount L (Nm³/min) of the purging gas introduced into the hydrogen generating electrode relative to the apparent area S (m²) of the hydrogen generating electrode, takes a value of 0.1 or more and 20 or less.

The introduction of the purging gas into the hydrogen generating electrode was described above. However, the purging gas may also be introduced into the oxygen generating electrode in the same manner as described above. The purging gas can be introduced into the oxygen generating electrode under the same conditions as those when the purging gas is introduced into the hydrogen generating electrode.

### De-Energization Step

In the de-energization step, the water electrolysis reaction is stopped by decreasing the current density to a value at which the electrolysis reaction does not take place. Whether the electrolysis reaction is no longer taking place can be determined based on the current density value. When the current density takes a value of 0 A/cm² or less, it is possible to determine that the electrolysis reaction has stopped. The current density preferably takes a value of 0 A/cm² or less, and more preferably 0 A/cm². In conventional water electrolysis, the above-described pre-de-energization step is not performed, and thus reverse current is generated due to the electrolysis reaction being stopped. However, according to the present invention, no reverse current is generated, or even if a reverse current is generated, the magnitude is very small. For this reason, the electrode catalyst is unlikely to undergo severe deterioration.

As a result of the water electrolysis reaction being stopped, the voltage of each of the water electrolysis cells included in the water electrolysis stack 13 is 0 V, which is OCV. The introduction of purging gas may be stopped when the current density has decreased to a value in the range in which no electrolysis reaction takes place.

According to the present invention described above, a reverse current is unlikely to be generated even when the water electrolysis reaction is stopped. For this reason, deterioration of the electrode catalyst is effectively suppressed. Accordingly, the present invention is advantageous in that, even when an intermittent operation in which the water electrolysis is stopped and then resumed is performed in the de-energization step, the electrode catalyst is unlikely to be damaged.

Up to here, the present invention has been described based on a preferred embodiment thereof. However, the present invention is not limited to the embodiment given above. For example, the hydrogen gas production apparatus 10 shown in Fig. 1 is merely an example of an apparatus used in the production method for producing a hydrogen gas of the present invention, and thus the production method of the present invention can also be carried out using an apparatus that has a configuration different from that of the apparatus 10.

For example, the apparatus 10 shown in Fig. 1 is configured such that the liquid feeding pump 14 supplies an electrolyte solution to the oxygen generating electrode. However, in addition thereto, the liquid feeding pump 14 may also supply an electrolyte solution to the hydrogen generating electrode. This form of supply of the electrolyte solution is advantageous in the case where alkaline water electrolysis is performed as the water electrolysis. In the case where the electrolyte solution is also supplied to the hydrogen generating electrode, it is preferable that a liquid-gas separation tank is also provided for the hydrogen generating electrode.

### Examples

Hereinafter, the present invention will be described based on examples. However, the scope of the present invention is not limited to the examples given below. Unless otherwise stated, the percent sign (%) means "mass%".

### Example 1

In this example, PEM water electrolysis was performed.
(1) Production of Catalyst Support for Oxygen Generating electrode Step (a)

An alkaline aqueous solution was prepared by dissolving 5.47 g of sodium hydroxide and 0.56 g of Na₂WO₄•2H₂O in 495 g of pure water. The obtained alkaline aqueous solution was defined as "solution A".

Separately from this, an aqueous solution of tin was obtained by dissolving 11.55 g of tin fluoride in 489 g of pure water in a beaker. The obtained aqueous solution of tin was defined as "solution B".

A tube pump was used to feed all of the solution A prepared above to the solution B being stirred with a paddle blade at room temperature (25°C).

### Step (b)

A slurry was obtained by bubbling an oxygen gas into the solution obtained in the step (a) heated to 90°C to perform wet oxidation.

### Step (c)

Hydrothermal synthesis was performed using the apparatus shown in Fig. 1 of WO 2016/098399. The temperature of the reactor 10 shown in the diagram was set to 450°C. Also, the pressure of the reactor 10 was set to 25 MPa. Through the hydrothermal synthesis, fluorine-containing tin oxide particles were obtained.

### (2) Production of Catalyst Support for Oxygen Generating electrode

An aqueous solution was obtained by adding 5 ml of 15.3% an iridium chloride acid aqueous solution and 15.3 g of sodium bisulfite to 200 ml of ion exchange water and stirring the mixture for 1 hour. An aqueous solution of sodium hydroxide was added to the obtained aqueous solution to adjust the pH to 5. Next, a 30% hydrogen peroxide solution was added, and thereafter, an aqueous solution of sodium hydroxide was added to adjust the pH to 9.

To the solution obtained in the above-described manner, the fluorine-containing tin oxide particles obtained in (1) were added, and the solution was brought to reflux at 90°C for 24 hours. Then, the solution was subjected to solid-liquid separation using a membrane filter. The solids were dried at 60°C for 12 hours, and then calcined in an atmosphere at 250°C for 3 hours. In this way, a catalyst support on which iridium oxide was supported was obtained.

### (3) Production of CCM

An ink was obtained by mixing 0.36 g of the catalyst support obtained in (2), 0.9 g of an ionomer, 0.8 g of water, 0.8 g of ethanol, and 0.7 g of 2-propanol. The obtained ink was applied onto one side of a Teflon (registered trademark) sheet using a bar coater to form an oxygen generating electrode catalyst layer.

Separately from this, a hydrogen generating electrode catalyst layer was formed by applying an ink, which was prepared in the same manner as described above except that the catalyst support was changed to platinum-supporting carbon black, onto one side of a Teflon (registered trademark) sheet using a bar coater.

As the solid polymer electrolyte, a Nafion (registered trademark) 117 membrane available from Du Pont was used. The above-described catalyst layers were respectively placed on two sides of the membrane and thermally pressed. Then, the Teflon (registered trademark) sheet was removed therefrom to obtain a CCM. The amount of iridium in the oxygen generating electrode was 0.05 mg/cm².

### (4) Production of Hydrogen Gas Production Apparatus

A JARI standard cell was used as a simplified version of the hydrogen gas production apparatus shown in Fig. 1.

### (5) Production of Hydrogen Gas

The hydrogen gas production apparatus was intermittently operated and subjected to an acceleration test to evaluate the degree of deterioration of the electrode catalyst. An operation protocol including the following steps (i) to (iii) was defined as one cycle, and this cycle was repeated 1000 times to intermittently produce a hydrogen gas.
(i) Energization electrolysis step: Pure water at 80°C was allowed to flow through the hydrogen gas production apparatus, and the current density was linearly increased from 0 A/cm² to 3 A/cm² over 90 seconds.
(ii) Pre-de-energization step: When the current density reached 3 A/cm², the current density was decreased stepwise (Δt = 0) to 0.01 A/cm² and held for 60 seconds. The water electrolysis reaction continued although to a lesser extent. A predetermined amount of nitrogen gas was continuously introduced into the hydrogen generating electrode at the same time as when the current density was decreased.

The ratio L/S of the amount L (Nm³/min) of nitrogen gas introduced into the hydrogen generating electrode relative to the apparent area S (m²) of the hydrogen generating electrode was set to 1.
(iii) De-energization step: The current density was decreased stepwise to 0 A/cm², with the open-circuit voltage of the water electrolysis cell being set to 0V, and held for 60 seconds. The water electrolysis reaction stopped completely. The introduction of the nitrogen gas was stopped when the current density decreased to 0 A/cm².

### (6) Evaluation

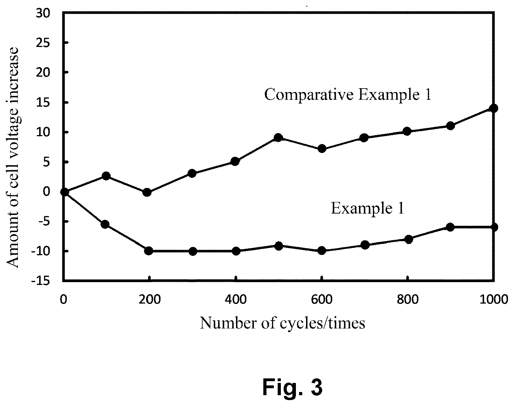

In the step (i) in each cycle of the process (5) described above, a cell voltage when the current density reached 3 A/cm² was measured, and changes in the cell voltage along with an increase in the number of cycles were evaluated. The results are shown in Fig. 3.

### Comparative Example 1

In this comparative example, the hydrogen gas production apparatus produced in Example 1 was used. An operation protocol including the following steps (i') to (iii') was defined as one cycle, and this cycle was repeated 1000 times to intermittently produce a hydrogen gas.
(i') Energization electrolysis step: This step was performed in the same manner as that of the step (i) of Example 1.
(ii') Pre-de-energization step: This step was not performed.
(iii') De-energization step: The current density was decreased stepwise to 0 A/cm², with the open-circuit voltage of the water electrolysis cell being set to 0V, and held for 60 seconds.

In the step (i') in each cycle, a cell voltage when the current density reached 3 A/cm² was measured, and changes in the cell voltage along with an increase in the number of cycles were evaluated. The results are shown in Fig. 3.

As is clear from the results shown in Fig. 3, in Example 1, an increase in cell voltage was not observed even when the number of cycles increased, rather, the cell voltage decreased. This fact means that, even when the hydrogen gas production apparatus is intermittently operated, the electrode catalyst is unlikely to deteriorate.

In contrast, in Comparative Example 1, the cell voltage increased as the number of cycles increased. This fact means that, as a result of the hydrogen gas production apparatus being intermittently operated, the electrode catalyst deteriorated.

### Industrial Applicability

According to the present invention, the reverse current generated when the hydrogen gas production apparatus shut down is suppressed, and deterioration of the electrode catalyst is thereby suppressed.

## Claims

1. A method for producing a hydrogen gas through electrolysis of water, the method comprising:
decreasing a current density to a range that is greater than 0 A/cm² and less than a value of the current density used in the electrolysis and in which the electrolysis does not stop, prior to the electrolysis being stopped;
holding the current density for 1 second or more while introducing a gas to at least a hydrogen generating electrode; and
decreasing the current density to a value at which the electrolysis does not take place so as to stop the electrolysis.

2. The method for producing a hydrogen gas through electrolysis of water according to claim 1,
wherein the gas is a gas that is electrochemically inert to a fuel cell reaction.

3. The method for producing a hydrogen gas through electrolysis of water according to claim 1 or 2,
wherein the gas is at least one selected from the group consisting of nitrogen and a noble gas.

4. The method for producing a hydrogen gas through electrolysis of water according to any one of claims 1 to 3,
wherein, prior to the electrolysis being stopped, the current density is decreased to a range that is greater than 0 A/cm² and 1 A/cm² or less.

5. The method for producing a hydrogen gas through electrolysis of water according to any one of claims 1 to 4,
wherein the current density is held for 30 seconds or more.

6. A method for shutting down a hydrogen gas production apparatus that produces a hydrogen gas through electrolysis of water,
the method comprising:
decreasing a current density to a range that is greater than 0 A/cm² and less than a value of the current density used in the electrolysis and in which the electrolysis does not stop, prior to the electrolysis being stopped;
holding the current density for 1 second or more while introducing a gas to at least a hydrogen generating electrode; and
decreasing the current density to a value at which the electrolysis does not take place so as to stop the electrolysis.

7. A apparatus for producing a hydrogen gas, comprising:
a storage unit in which a procedure of the method according to claim 6 is stored; and
a controller that stops electrolysis of water based on the procedure stored in the storage unit.

8. The apparatus for producing a hydrogen gas according to claim 7, further comprising:
a hydrogen generating electrode;
an oxygen generating electrode; and
an electrolyte membrane that separates the hydrogen generating electrode and the oxygen generating electrode from each other,
wherein the electrolyte membrane is a solid polymer electrolyte membrane.

9. The apparatus for producing a hydrogen gas according to claim 7 or 8,
wherein the oxygen generating electrode contains a platinum group element.

10. The apparatus for producing a hydrogen gas according to claim 9,
wherein the platinum group element is iridium.

11. The apparatus for producing a hydrogen gas according to any one of claims 7 to 10,
wherein the controller controls potentials of the hydrogen generating electrode and the oxygen generating electrode until the electrolysis of water is stopped so as to maintain a state in which the oxygen generating electrode always has a potential higher than that of the hydrogen generating electrode.
